# FASCICULE DE BREVET EUROPEEN

(11) **EP 2 405 612 B1**
(45) Date de publication et mention de la délivrance du brevet: **05.09.2012**
(21) Numéro de dépôt: 11004827.9
(22) Date de dépôt: 14.06.2011
(51) Int. Cl.: H04L 12/40

(54) **Résau de communication distribué, modulaire et configurable pour un système avionique embarqué**
Verteiltes, modulares und konfigurierbares Kommunikationsnetz für ein Flugzeug-Bordsystem
Distributed, modular, configurable communication network for an on-board avionics system

(30) Priorité: 07.07.2010 FR 1002853
(43) Date de publication de la demande: 11.01.2012
(73) Titulaire: EUROCOPTER, 13725 Marignane Cédex (FR)
(72) Inventeur: Emonide, André, 13320 Bouc Bel Air (FR); Germanetti, Serge, 13005 Marseille (FR)
(74) Mandataire: GPI & Associés

(56) Documents cités:
- EP-A1- 1 538 785
- FR-A1- 2 920 623
- GB-A- 2 433 005
- US-A1- 2009 138 136

## Description

La présente demande est issue de la demande de brevet française FR1002853 déposée le 7 juillet 2010.

L'invention se rapporte au domaine technique général des systèmes avioniques embarqués.

La présente invention concerne plus particulièrement l'architecture des interfaces et d'un réseau de communication entre les différents éléments constitutifs d'un système avionique, pour optimiser les échanges d'informations.

L'intégration d'équipements divers et variés du genre FADEC, trains d'atterrissage, climatisation, équipements de mission, poste radio, tous « of the shelves » selon une expression en langue anglaise, dans un système avionique et/ou de mission, impose l'utilisation de leurs interfaces numériques ou analogiques en l'état. Le réseau de communication pour l'échange des données de bord est donc hétérogène. Il devient donc difficile d'optimiser la gestion d'un tel réseau de communication de bord, hétérogène, intégré dans un système avionique ou de mission complet.

Dans les systèmes connus, un senseur ou un actionneur est relié directement à un calculateur, lequel assure la fonction associée au dit senseur ou actionneur. A titre d'exemple, la conversion des données analogiques ou discrètes en données numériques ou inversement se fait grâce aux calculateurs. Ces derniers peuvent en outre faire office de passerelle de données pour convertir des formats numériques ou pour l'aiguillage d'informations. Ceci comporte un certain nombre d'inconvénients.

En effet, les senseurs ou actionneurs sont souvent déportés et éloignés des soutes avioniques comportant les calculateurs et, par suite, le câblage induit par les connexions directes entre des senseurs ou actionneurs d'une part et des calculateurs d'autre part, est très complexe. Un tel câblage est donc difficile à installer, encombrant et représente une masse embarquée non négligeable.

En outre, l'utilisation des calculateurs n'est pas optimisée. Ceci est notamment le cas lorsque des calculateurs à microprocesseurs sont utilisés pour des tâches de conversion de formats (analogique/numérique, numérique/analogique, numérique/numérique) ou pour des tâches d'aiguillage de l'information.

Citons divers documents relatifs au domaine de l'invention.

Le document FR2920623 dont la teneur est reflétée par le préambule de la revendication principale, décrit une commutation de trames pour réseau AFDX, afin de connecter des équipements embarqués, des calculateurs embarqués, via des commutateurs de trame dédiés. Une pluralité d'équipements (capteurs / actionneurs) émettent et/ou reçoivent des données vers un réseau numérique AFDX (Avionics Full Duplex Switched Ethernet) auquel sont reliés des calculateurs embarqués. Les équipements sont connectés à des dispositifs concentrateurs au moyen d'un autre réseau numérique de connexion de type bus CAN ou ARINC429. Ce sont les dispositifs concentrateurs qui sont reliés au réseau numérique AFDX pour lui transmettre et/ou en recevoir les données numériques. Ces dispositifs concentrateurs jouent un rôle de passerelle de conversion entre le langage numérique du réseau numérique de connexion CAN ou ARINC429 et le langage numérique du réseau numérique AFDX.

Le document US2009138136 décrit un système de communication entre des unités de commande électroniques (ECU), via un réseau de commande (LAN).

Le document GB2433005 décrit un convertisseur de protocole pour éviter les surcharges de mémoire tampon et les problèmes de temporisation, lors de la transmission de données entre un dispositif selon la norme ARINC429 et un réseau AFDX ou Ethernet.

Le document EP1538785 décrit une installation d'essais en vol avec un format de données de style paquets à paramètres datés véhiculés sous un format unique, et fondée sur une architecture à quatre niveaux de données.

L'invention est définie par les revendications. L'invention permet d'obtenir des concentrateurs de données et/ou des passerelles de distribution dans des zones protégées communes à des organes fonctionnels, ce concentrateur de données étant modulaire et configurable par l'intermédiaire d'une liaison série de type numérique. De fait il est possible de définir des paramètres de configuration ou de reconfiguration pour chacun des équipements, de façon autonome.

L'invention permet de proposer un nouveau réseau de communication pour système avionique embarqué, qui s'affranchit des limitations mentionnées ci-dessus.

Ainsi, l'invention présente une architecture distribuée sur ledit réseau de manière à intégrer divers réseaux de communication hétérogènes, basés par exemple sur des technologies de Bus hétérogènes du genre ARINC 429, Mil Bus 1553 et Ethernet.

Des réalisations de l'invention forment un réseau de communication pour un système avionique embarqué d'aéronef, transmettant des informations entre au moins un calculateur de bord et des organes fonctionnels du genre senseurs et actionneurs et comprenant des liaisons analogiques et des liaisons par Bus numériques, qui comprend :
- au moins un concentrateur de données modulaire et configurable pour numériser des données de senseurs ou pour effectuer une conversion numérique/analogique de données d'actionneurs ou une autre conversion numérique/numérique, ledit concentrateur étant agencé au plus près c'est-à-dire à proximité des senseurs et des actionneurs,
- au moins une passerelle modulaire et configurable incluant des fonctions de réception, d'acquisition, de modification de formats numériques et d'aiguillage d'information, ladite passerelle étant logée dans une zone protégée d'un aéronef,
- des liaisons analogiques entre les organes fonctionnels et le concentrateur de données,
- au moins une première liaison par Bus numérique entre le concentrateur de données et la passerelle,
- et au moins une seconde liaison par Bus numérique entre la passerelle et le calculateur de bord.

Selon un exemple de réalisation conforme à l'invention, le réseau de communication comprend au moins une liaison sans fil ou à modulation sur courant porteur pour relier la passerelle à un ou plusieurs organes de commande (senseur, concentrateur de données ou calculateurs).

Selon un exemple de réalisation conforme à l'invention, le concentrateur de données comporte des éléments modulaires sous forme de briques élémentaires et fonctionnelles configurables.

Selon un exemple de réalisation conforme à l'invention, la passerelle comporte des éléments modulaires sous forme de briques élémentaires et fonctionnelles configurables.

Selon un exemple de réalisation conforme à l'invention, le réseau de communication comprend une base de données reliée à la passerelle et au concentrateur de données par l'intermédiaire d'une liaison série de type numérique, ladite base de données étant initialisée à partir de fichiers de configuration du genre fichiers XML.

Selon un exemple de réalisation conforme à l'invention, les Bus numériques sont basés sur le standard de communication ARINC 429, Mil Bus 1553, Bus CAN ou Ethernet.

Les objets assignés à l'invention sont atteints également à l'aide d'un système avionique embarqué pour aéronef, comportant un réseau de communication tel que présenté ci-dessus.

Un avantage de l'invention réside dans le fait que le ou les calculateurs du système avionique ou de mission sont réservés exclusivement aux logiciels d'application. (Vehicle Management System). Un réseau de communication conforme à l'invention permet par conséquent d'alléger les fonctions qui étaient en général incluses dans les calculateurs de bord, de manière à ce que la puissance de calcul des microprocesseurs soit réservée aux logiciels d'application.

Un autre avantage du réseau de communication conforme à l'invention réside dans une diminution sensible de la masse de câblage embarquée.

Un autre avantage du réseau de communication conforme à l'invention réside dans l'utilisation de produits standards du marché et donc de bénéficier d'une offre importante, pour construire un réseau hétérogène mais fonctionnel.

Un autre avantage du réseau de communication conforme à l'invention réside dans le fait que tout senseur ou actionneur sera connecté à ce réseau de communication. Les fonctions de communication entre les différents éléments connectés à ce réseau sont assurées par l'utilisation de transmissions électriques de signaux, de Bus ou de liaisons analogiques et d'équipements passerelles ou de concentrateurs de données, qui permettent de sécuriser la distribution et le stockage d'informations. Le fait de disposer d'un réseau de communication autonome permet de retirer ces fonctions des calculateurs qui restent alors dédiés aux calculs de mission par exemple, leur déroulement de fonction n'étant pas perturbé par les temps d'attente d'acquisition ou de transmission.

La présence de ce réseau comprenant par exemple les concentrateurs de données à proximité des senseurs ou actionneurs permet de réduire la quantité de câblage dans l'ensemble du véhicule ainsi équipé.

L'invention et ses avantages apparaîtront avec plus de détails dans le cadre de la description qui suit avec un exemple de réalisation donné à titre illustratif en référence aux figures annexées qui représentent :
- la figure 1, une illustration schématique d'un exemple de réalisation d'un réseau de communication conforme à l'invention,
- la figure 2, une illustration schématique d'un détail d'un exemple de réalisation d'un réseau de communication conforme à l'invention comportant une passerelle tout en numérique,

- la figure 3, une illustration schématique et plus détaillée d'une passerelle d'un réseau de communication conforme à l'invention,
- et la figure 4, une illustration schématique et plus détaillée d'un concentrateur de données d'un réseau de communication conforme à l'invention.

Les éléments structurellement et fonctionnellement identiques, présents sur plusieurs figures distinctes, sont affectés d'une seule et même référence numérique ou alphanumérique.

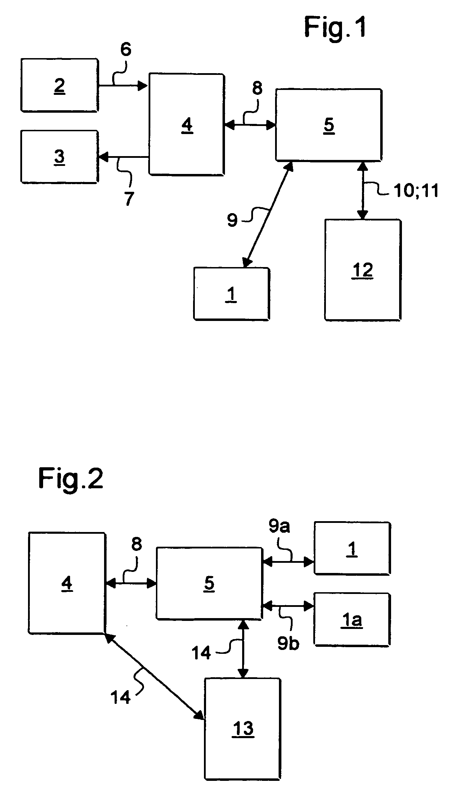

La figure 1 est une illustration schématique d'un exemple de réalisation d'un réseau de communication conforme à l'invention pour un système avionique embarqué d'aéronef. Le réseau de communication transmet des informations entre au moins un calculateur de bord 1 et des organes fonctionnels du genre senseurs 2 et actionneurs 3.

A titre d'exemple, les senseurs 2 sont connectés au réseau de communication. Un gestionnaire de réseau va assurer la transmission sécurisée de cette donnée afin d'assurer la distribution de ladite donnée à tous les équipements concernés dans les délais temporels souhaités. La donnée est une information ou un groupe d'informations électriques ou numériques, correspondant à des valeurs de mesure, d'état ou de consigne, échangées entre les différents composants d'un système avionique embarqué. Elles constituent les données fonctionnelles échangées par une fonction système (exemple Vehicle Management System).

Le réseau de communication comprend des liaisons analogiques et des liaisons par Bus numériques.

Selon un exemple de réalisation conforme à l'invention, les Bus numériques sont basés sur le standard de communication ARINC 429, Mil Bus 1553, Bus CAN ou Ethernet.

Le réseau de communication comprend également au moins un concentrateur de données 4, modulaire et configurable pour numériser des données de senseurs 2 ou pour effectuer une conversion numérique/analogique de données d'actionneurs 3.

Le réseau de communication comprend également au moins une passerelle 5, modulaire et configurable incluant des fonctions de réception, d'acquisition, de modification de formats numériques et d'aiguillage d'information.

Des liaisons analogiques 6, 7 sont prévues entre les organes fonctionnels, par exemple les senseurs 2 et les actionneurs 3, et le concentrateur de données 4.

Le réseau de communication comprend également une première liaison par Bus numérique 8 entre le concentrateur de données 4 et la passerelle 5.

Une seconde liaison par Bus numérique 9 est prévue entre la passerelle 5 et le calculateur de bord 1.

Selon un exemple de réalisation conforme à l'invention, le réseau de communication comprend au moins une liaison sans fil 10 ou à modulation sur courant porteur 11, pour relier la passerelle 5 à un ou plusieurs organes de commande 12 (senseur, concentrateur de données ou calculateur).

La figure 2 est une illustration schématique d'un détail d'un exemple de réalisation d'un réseau de communication conforme à l'invention comportant une passerelle 5 tout en numérique.

La passerelle 5 permet de gérer la communication sur un réseau de Bus numériques hétérogène. Ainsi, la première liaison par Bus numérique 8 est un Bus basé sur le standard ARINC 429 relie la passerelle 5 au concentrateur de données 4, non représenté sur cette figure.

La seconde liaison par Bus numérique 9 est dédoublée dans cet exemple de réalisation, avec un Bus basé sur le standard Mil Bus 1553, référencé 9a, reliant le calculateur de bord 1 à la passerelle 5 et une liaison Ethernet 9b reliant un calculateur de bord additionnel 1a à la passerelle 5.

Selon un exemple de réalisation conforme à l'invention, le réseau de communication comprend une base de données 13 reliée à la passerelle 5 et au concentrateur de données 4 par l'intermédiaire d'une liaison série 14 de type numérique.

La base de données 13 est initialisée par des fichiers d'initialisation du genre fichiers XML. Ces fichiers d'initialisation XML permettent par exemple de définir les paramètres de configuration ou de reconfiguration pour chacun des équipements, par exemple le concentrateur de données 4 et la passerelle 5.

Les concentrateurs de données 4 et les passerelles 5 peuvent donc recevoir des fichiers de configuration générés par la base de données et transmis au moyen des bus numériques assurant la liaison entre les différents constituants et ainsi se reconfigurer de façon autonome.

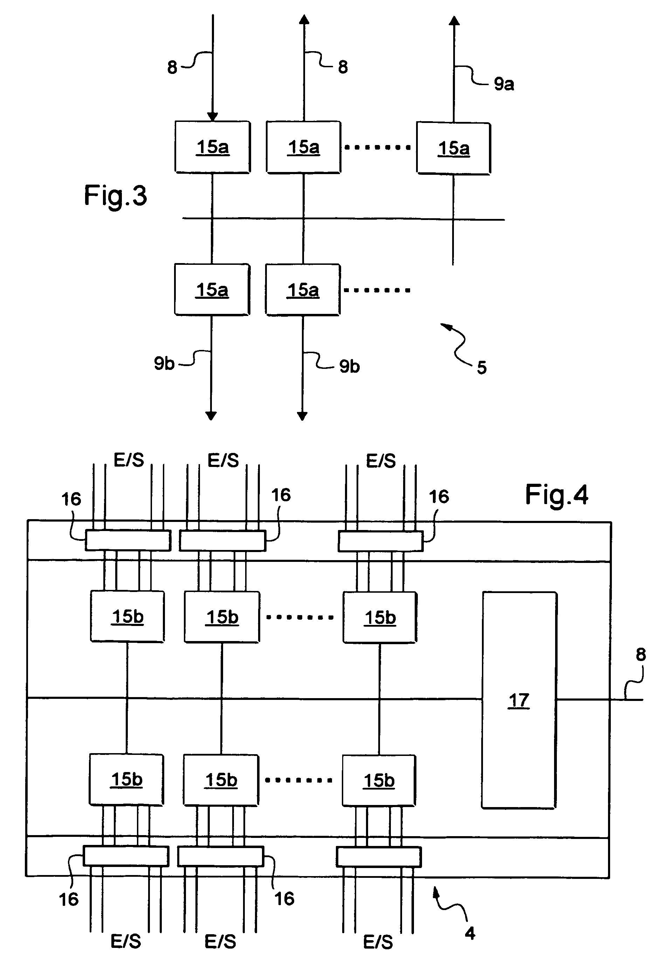

La figure 3 est une illustration schématique et plus détaillée d'une passerelle 5 d'un réseau de communication conforme à l'invention.

La passerelle 5 comporte des éléments modulaires sous forme de briques élémentaires et fonctionnelles 15a configurables.

La passerelle 5 est logée dans des zones protégées d'un aéronef, par exemple dans des zones à l'abri de tirs, d'humidité, du feu, de champs électromagnétiques forts, de sables et de poussières.

Chaque brique élémentaire et fonctionnelle 15a permet d'effectuer une conversion numérique/numérique ou une liaison de type numérique entre différents types de Bus numériques 8, 9a et 9b. Cette liaison de type numérique est identique pour tous les modules constituant un même composant.

La figure 4 est une illustration schématique et plus détaillée d'un concentrateur de données 4 d'un réseau de communication conforme à l'invention.

Le concentrateur de données 4 comporte des éléments modulaires sous forme de briques élémentaires et fonctionnelles 15b complémentaires. Ces dernières sont bien entendu configurables.

Le concentrateur de données 4 est agencé au plus près des senseurs 2 et des actionneurs 3 de manière à réduire au mieux la quantité de câblages nécessaires pour établir les connexions.

Chaque brique élémentaire et fonctionnelle 15b du concentrateur de données 4 est reliée d'une part à la première liaison par Bus numérique 8 et d'autre part à un adaptateur électrique 16 comportant des connexions d'entrée/sortie E/S pour des senseurs 2 et des actionneurs 3 ainsi qu'à un adaptateur électrique si nécessaire pour des E/S analogiques ou numériques. Pour les entrées/sorties E/S numériques, on peut utiliser des signaux digitaux en différentes tensions, par exemple 24V ou 6V.

Chaque brique élémentaire et fonctionnelle 15b permet d'effectuer une conversion numérique/analogique. analogique/numérique ou numérique/numérique. Les entrées/sorties E/S du chaque brique élémentaire et fonctionnelle 15 sont donc reliées à un organe fonctionnel du genre senseur 2 ou actionneur 3.

Le concentrateur de données 4 comporte également un bloc fonctionnel numérique 17 intégrant le protocole du Bus numérique 8, protocole standard du genre ARINC ou ETHERNET.

Une zone mémoire optionnelle du concentrateur de données 4 peut servir par exemple à stocker si nécessaire des données d'acquisition pour une analyse et une exploitation de ces enregistrements a posteriori.

Afin d'expliquer différemment le fonctionnement et les avantages de l'usage d'une passerelle de distribution selon l'invention, soulignons que cette passerelle de distribution comporte des modules répartis dans les différents équipements du réseau de bord, à savoir concentrateur de données, calculateur, etc.

Des fichiers de configuration permettent de désigner des informations à destination d'un autre équipement et sont recopiées à l'aide de cette passerelle de distribution dans le module de l'équipement utilisateur de l'information.

Ainsi le rôle de chaque équipement est uniquement d'enregistrer les données à jour des fichiers de configuration dans son module ou d'utiliser des données cibles à partir du module, comme si le module faisait partie intégrante de la mémoire de ces équipements (e.g. calculateurs, concentrateurs de données).

Pour les concentrateurs de données 4, les fichiers de configuration comportent la liste et le format des données acquises provenant des senseurs 2 ou transmises aux actionneurs 3, le type de Bus numériques pour l'envoi des informations aux passerelles 5 ainsi que le format et la séquence temporelle des données transmises sur le Bus numérique choisi.

Pour les passerelles 5, les fichiers de configuration comportent la liste et le format des données d'entrée ou de sortie ainsi que le type de Bus numérique et son protocole.

Les concentrateurs de données 4 et les passerelles 5 sont composés de préférence exclusivement de réseaux logiques programmables, FPGA ou autres. Les réseaux logiques programmables peuvent recevoir par l'intermédiaire d'une liaison série 14 de type numérique les fichiers de configuration pour un système avionique donné. Ces fichiers comportent pour chaque donnée traitée les paramètres qui permettront de configurer les actions de traitement associés à ces données, et devant être effectuées par le composant concerné.

Le réseau de communication d'un système avionique complet est donc constitué de calculateurs 1,1a, de senseurs 2 et d'actionneurs 3. La manière dont ces éléments sont connectés est réalisée par des sous ensembles identiques comprenant chacun des concentrateurs de données 4, des Bus numériques 8,9a, 9b et des passerelles 5. Le nombre de ces sous ensembles et leur configuration physique modulaire dépend de la typologie du système avionique et/ou de mission. Les fonctions génériques assurées par ces sous ensemble, par exemple l'échange d'informations, la modification de formats ou l'aiguillage d'informations, sont configurées par l'intermédiaire des fichiers de configuration.

La présente invention porte donc sur une nouvelle architecture avionique et/ou de mission se basant sur la répartition optimisée des fonctions entre les composants d'un système avionique. II s'agit dans le cadre de l'invention de répartir des charges de traitement entre calculateurs à champs logiques programmables FPGA et calculateurs à microprocesseurs et sur une localisation déportée des modules en charge des traitements de données (conversion de format et aiguillage des informations).

Les concentrateurs de données 4, les bus numériques 8,9a, 9b et les passerelles 5 sont ainsi des briques modulaires configurables qui permettent de construire la configuration adéquate du réseau de communication d'un système avionique.

L'invention est sujette à de nombreuses autres modes de réalisations que ceux qui ont été décrits.

## Revendications

1. Réseau de communication pour un système avionique embarqué à bord d'un aéronef, ledit réseau de communication transmettant des informations entre des organes fonctionnels (1, 1 a, 2, 3) dont au moins un calculateur de bord (1, 1a), des senseurs (2) et actionneurs (3), ce réseau comprenant des liaisons (6, 7, 9a, 9b) entre lesdits organes fonctionnels, ainsi que des interfaces de communication entre ces liaisons (6, 7, 9a, 9b) et lesdits organes fonctionnels, tel qu'entre au moins une desdites liaisons (6, 7, 9a, 9b) et au moins un desdits organes fonctionnels (1, 1 a, 2, 3), le réseau de communication comprend :
- au moins un concentrateur de données (4) pour numériser des données de senseurs (2) ou pour effectuer des conversions numérique/analogique de données d'organes fonctionnels (1, 1a, 2, 3) et/ou des conversions numérique/numérique,
- dans une interface de communication, au moins une passerelle de distribution (5) modulaire et configurable incluant des fonctions de réception, d'acquisition, de modification de formats numériques et d'aiguillage d'information,
- dans ladite interface de communication, au moins une première liaison numérique (8) formant un Bus numérique (8) entre le concentrateur de données (4) et la passerelle de distribution (5),
- et au moins une seconde liaison par Bus numérique (9a, 9b) étant prévue entre la passerelle de distribution (5) et le calculateur de bord (1,1a),
**caractérisé en ce que** :
- au moins un concentrateur de données (4) et / ou au moins une passerelle de distribution (5) est logé dans une zone protégée avec au moins un des organes fonctionnels (1, 1a, 2, 3), entre ladite liaison (6, 7, 9a, 9b) du réseau de communication et ledit organe fonctionnel (1, 1a, 2, 3), et que
- le concentrateur de données (4) est modulaire et configurable, tandis que le réseau de communication comprend une base de données (13) reliée à la passerelle (5) et au concentrateur de données (4) par l'intermédiaire d'une liaison série (14) de type numérique, cette base de données (13) étant initialisée par des fichiers d'initialisation qui permettent de définir les paramètres de configuration ou de reconfiguration pour chacun des concentrateur de données (4) et de la passerelle (5), ledit concentrateur de données (4) et la passerelle (5) pouvant donc recevoir lesdits fichiers de configuration générés par la base de données et transmis au moyen dudit bus numérique (9a, 9b) assurant une reconfiguration autonome.

2. Réseau selon la revendication 1, **caractérisé en ce qu'**au moins un concentrateur de données (4) et au moins une passerelle de distribution (5) sont logés dans une zone protégée commune à l'un des organes fonctionnels (1, 1 a, 2, 3) en communication par le réseau.

3. Réseau selon la revendication 1, **caractérisé en ce que** ce réseau de communication comprend au moins une liaison sans fil ou à modulation sur courant porteur pour relier la passerelle de distribution (5) à un ou plusieurs organes fonctionnel (1, 1a, 2, 3) de commande.

4. Réseau selon la revendication 1, **caractérisé en ce que** le concentrateur de données (4) comporte des éléments modulaires sous forme de briques élémentaires et fonctionnelles (15b) configurables.

5. Réseau selon la revendication 1, **caractérisé en ce que** la passerelle de distribution (5) comporte des éléments modulaires sous forme de briques élémentaires et fonctionnelles (15a) configurables.

6. Réseau selon la revendication 1, **caractérisé en ce que** ladite base de données (13) est initialisée par des fichiers d'initialisation du genre fichiers XML.

7. Réseau selon la revendication 1, **caractérisé en ce que** ledit concentrateur de données (4) et ladite passerelle (5) sont composés de réseaux logiques programmables, FPGA ou autres, ces réseaux logiques programmables pouvant recevoir par l'intermédiaire de ladite liaison série (14) numérique les fichiers de configuration qui comportent pour chaque donnée traitée les paramètres de configurer les actions de traitement associés à ces données et devant être effectuées..

8. Réseau selon la revendication 1, **caractérisé en ce que** les Bus numériques (8, 9a, 9b) sont basés sur le standard de communication ARINC 429, Mil Bus 1553, Bus CAN ou Ethernet.

## Claims

1. Communications network for an avionics system on board an aircraft, said communications network transmitting information between functional members (1, 1a, 2, 3) including at least one on-board computer (1, 1a), sensors (2), and actuators (3), this network comprising links (6, 7, 9a, 9b) between said functional members, and communications interfaces between these links (6, 7, 9a, 9b) and said functional members, such that between at least one of said links (6, 7, 9a, 9b) and at least one of said functional members (1, 1a, 2, 3), the communications network comprises:
- at least one data concentrator (4) for digitizing data from sensors (2) or for performing digital-to-analog conversions of data from functional members (1, 1a, 2, 3) and/or digital-to-digital conversions,
- in a communications interface, at least one modular and configurable distribution gateway (5) including functions of receiving, acquiring, changing digital formats, and information switching,
- in said communications interface, at least one first digital link (8) forming a digital bus (8) between the data concentrator (4) and the distribution gateway (5),
- and at least one second link via digital bus (9a, 9b) being provided between the distribution gateway (5) and the on-board computer (1, 1a),
**characterised in that**:
- at least one data concentrator (4) and/or at least one distribution gateway (5) is housed in a protected zone with at least one of the functional members (1, 1a, 2, 3), between said link (6, 7, 9a, 9b) of the communications network and said functional member (1, 1a, 2, 3), and **in that**
- the data concentrator (4) is modular and configurable, while the communications network comprises a database (13) connected to the gateway (5) and to the data concentrator (4) via a digital type serial link (14), this database (13) being initialized by initialization files which make it possible to define the configuration or reconfiguration parameters for each of the data concentrators (4) and the gateway (5), said data concentrator (4) and the gateway (5) thus being able to receive said configuration files generated by the database and transmitted by means of said digital bus (9a, 9b) ensuring autonomous reconfiguration.

2. Network according to Claim 1, **characterised in that** at least one data concentrator (4) and at least one distribution gateway (5) are housed in a protected zone common to one of the functional members (1, 1a, 2, 3) in communication via the network.

3. Network according to Claim 1, **characterised in that** this communications network comprises at least one wireless or carrier-current modulation link for connecting the distribution gateway (5) to one or more control functional members (1, 1a, 2, 3).

4. Network according to Claim 1, **characterised in that** the data concentrator (4) includes modular elements in the form of configurable elementary and functional bricks (15b).

5. Network according to Claim 1, **characterised in that** the distribution gateway (5) includes modular elements in the form of configurable elementary and functional bricks (15a).

6. Network according to Claim 1, **characterised in that** said database (13) is initialized by initialization files such as XML files.

7. Network according to Claim 1, **characterised in that** said data concentrator (4) and said gateway (5) are made up of programmable logic arrays, FPGAs, etc., these programmable logic arrays being able to receive via said digital serial link (14) the configuration files which include, for each datum processed, the parameters for configuring the processing actions associated with said data and that have to be performed.

8. Network according to Claim 1, **characterised in that** the digital buses (8, 9a, 9b) are based on the ARINC 429, Mil Bus 1553, CAN Bus, or Ethernet communications standards.

## Patentansprüche

1. Kommunikationsnetz für ein Flugzeugbordsystem, welches Informationen überträgt zwischen Funktionseinheiten (1, 1a, 2, 3), worunter sich mindestens ein Bordrechner (1, 1a), Detektoren (2) und Stellorgane (3) befinden, wobei das Netz Verbindungen (6, 7, 9a, 9b) zwischen den Funktionseinheiten sowie Kommunikationsschnittstellen zwischen diesen Verbindungen (6, 7, 9a, 9b) und den Funktionseinheiten aufweist, wie zwischen mindestens einer der Verbindungen (6, 7, 9a, 9b) und mindestens einer der Funktionseinheiten (1, 1a, 2, 3), wobei das Kommunikationsnetz aufweist:
- mindestens einen Datenkonzentrator (4) zur Digitalisierung der Daten der Detektoren (2) oder zum Durchführen von Digital/Analog-Datenumwandlungen der Funktionseinheiten (1, 1a, 2, 3) und/oder von Digital/Analog-Umwandlungen,
- in einer Kommunikationsschnittstelle mindestens eine Verteilerschnittstelle (5), die modular und konfigurierbar ist und die die Funktionen Empfang, Erfassung, Veränderung digitaler Formate und Verzweigung von Informationen umfasst,
- in der Kommunikationsschnittstelle mindestens eine erste digitale Verbindung (8), die einen digitalen Bus (8) zwischen dem Datenkonzentrator (4) und der Verteilerschnittstelle (5) bildet,
- und mindestens eine zweite Verbindung über einen digitalen Bus (9a, 9b) zwischen der Verteilerschnittstelle (5) und dem Bordrechner (1, 1a),
**dadurch gekennzeichnet, dass**
- mindestens ein Datenkonzentrator (4) und/oder mindestens eine Verteilerschnittstelle (5) in einem geschützten Bereich angeordnet ist/sind mit mindestens einem der Funktionseinheiten (1, 1a, 2, 3) zwischen der Verbindung (6, 7, 9a, 9b) des Kommunikationsnetzes und der Funktionseinheit (1, 1a, 2, 3) und dass
- der Datenkonzentrator (4) modular und konfigurierbar ist, während das Kommunikationsnetz eine Datenbasis (13) aufweist, die mit der Schnittstelle (5) und dem Datenkonzentrator (4) über eine digitale Reihenverbindung (14) verbunden ist, wobei diese Datenbasis (13) durch Initialisierungsdateien initialisiert ist, die es ermöglichen, die Konfigurationsparameter oder Rekonfigurationsparameter für jeden Datenkonzentrator (4) und für die Schnittstelle (5) zu definieren, wobei der Datenkonzentrator (4) und die Schnittstelle (5) somit die Konfigurationsdateien empfangen können, die von der Datenbank erzeugt wurden und über den Digitalbus (9a, 9b) gesendet wurden, wodurch eine autonome Rekonfiguration sichergestellt wird.

2. Netz nach Anspruch 1, **dadurch gekennzeichnet, dass** mindestens ein Datenkonzentrator (4) und mindestens eine Verteilerschnittstelle (5) in einem gemeinsamen geschützten Bereich bei einer der Funktionseinheiten (1, 1a, 2, 3) angeordnet sind, welche durch das Netz vernetzt ist.

3. Netz nach Anspruch 1, **dadurch gekennzeichnet, dass** das Kommunikationsnetz mindestens eine schnurlose Verbindung oder eine Verbindung durch eine Modulation auf einem Trägerstrom aufweist, um die Verteilerschnittstelle (5) mit einer oder mehreren Steuerfunktionseinheiten (1, 1a, 2, 3) zu verbinden.

4. Netz nach Anspruch 1, **dadurch gekennzeichnet, dass** der Datenkonzentrator (4) modulare Elemente aufweist in Form von konfigurierbaren Elementarbausteinen und Funktionsbausteinen (15b).

5. Netz nach Anspruch 1, **dadurch gekennzeichnet, dass** die Verteilerschnittstelle (5) modulare Elemente aufweist in Form von konfigurierbaren Elementarbausteinen und Funktionsbausteinen (15a).

6. Netz nach Anspruch 1, **dadurch gekennzeichnet, dass** die Datenbank (13) durch Initialisationsdateien initialisiert wird vom Typ XML-Datei.

7. Netz nach Anspruch 1, **dadurch gekennzeichnet, dass** der Datenkonzentrator (4) und die Schnittstelle (5) zusammengesetzt sind aus programmierbaren logischen Netzen, einem FPGA oder anderen, wobei diese programmierbaren logischen Netze über die digitale Reihenverbindung (14) Konfigurationsdateien empfangen können, die für jedes verarbeitete Datum die Parameter zum Konfigurieren der zu diesen Daten zugehörigen Verarbeitungsschritte aufweisen, bevor diese ausgeführt werden.

8. Netz nach Anspruch 1, **dadurch gekennzeichnet, dass** die Digitalbusse (8, 9a, 9b) auf den Kommunikationsstandards ARINC 429, MIL-Bus 1553, Bus CAN oder Ethernet basieren.
